# NEW EUROPEAN PATENT SPECIFICATION

(11) **EP 2 465 602 B2**
(45) Date of publication and mention of the opposition decision: **27.04.2022**
(45) Mention of the grant of the patent: 01.05.2013
(21) Application number: 11193509.4
(22) Date of filing: 14.12.2011
(51) Int. Cl.: B01F 3/04, B01F 5/04, B01F 5/06, F01N 3/20, B01F 5/00

(54) **Method and device for exhaust gas cleaning**
Abgasreinigungsverfahren und Vorrichtung
Procédé et dispositif de nettoyage des gaz d'échappement

(30) Priority: 14.12.2010 FI 20106317; 09.06.2011 FI 20115569
(43) Date of publication of application: 20.06.2012
(73) Proprietor: Proventia Oy, 90460 Oulunsalo (FI)
(72) Inventor: Ylimäki, Kai, FI-91910 Tupos (FI); Tyni, Tuomas, FI-90420 Oulu (FI)
(74) Representative: Berggren Oy

(56) References cited:
- WO-A1-2004/038192
- WO-A2-2009/024815
- US-A1- 2006 275 192
- US-B1- 6 889 500

## Description

The invention relates to a method for cleaning exhaust gas, in which method a reactive substance is fed into an exhaust gas flow flowing in an exhaust gas passage.

A technique is used for reducing NOx emissions in the exhaust gasses from diesel engines, where nitrogen oxides are transformed into harmless compounds with the aid of a reactive substance to be mixed into the exhaust gas and a catalyser. SCR (Selective catalytic reduction) technique uses for example a urea/water mixture as the reactive substance, which is fed in small drops in among the exhaust gas. Under the influence of the heat of the exhaust gas the water in the urea/water mixture is vaporised and the urea is disintegrated into ammonia, which reacts in the SCR catalyser with the nitrogen oxides. Pure nitrogen and water is generated as a final result of the reaction.

The disintegration of the urea into ammonia occurs in several stages and different intermediate products can be generated in the process, which can precipitate in the urea injection site or in the spots of the exhaust gas passage following the injection site. Precipitation occurs especially when the injection of the urea/water mixture occurs from the side of the exhaust gas passage and the mixture directly hits the wall of the exhaust gas passage. The risk for formation of precipitates is especially high close to the urea spraying site. Excessively low surface temperatures of the exhaust gas passage, insufficient time for the urea to vaporise before ending up in the catalyser, and bends in the exhaust gas passage, where the urea drops collide with walls, increase the formation of precipitates. Precipitates can accumulate in the exhaust gas passage to such an amount that they weaken the flow of the exhaust gas and raise the counter pressure in the engine to be too high. The precipitates also decrease the distribution of the reactive substance in the exhaust gas passage, which decreases the efficiency of the SCR system.

In order to ensure the vaporisation of the urea the injected urea should mix as well as possible with the exhaust gas without colliding with the walls of the exhaust gas passage. Additionally the temperature of the exhaust gas should be sufficiently high and the distance between the injection site and the catalyser should be sufficiently large. In practice the dimensions of vehicles and the placement of the engine set their own limits for the structure of the exhaust gas passage, which makes the optimal arranging of the urea feeding more difficult.

Publication WO2008/144385 presents a flow device to be placed in an exhaust gas passage, which flow device comprises at least one curved tube-like flow guide for mixing the exhaust gas flow. In this solution the aim is to set the exhaust gas flow in its entirety in a rotation motion which circulates the walls of the flow device, so that the reactive substance, such as urea, to be sprayed into the exhaust gas flow would mix as evenly as possible with the exhaust gas. The solution can however not prevent the reactive substance from colliding with the walls of the exhaust gas passage.

Publication EP1770253 presents a cleaning device for the exhaust gas of an engine, which device comprises a catalytic cleaner placed in an exhaust gas passage, a nozzle placed above the cleaner in the flow direction of the exhaust gas for feeding a reactive substance and a vortex device placed above the nozzle in the flow direction of the exhaust gas for setting the exhaust gas flow in a spiral flow rotating around the central axis of the exhaust gas passage. The purpose of the swirling flow is to ensure an even mixing of the reactive substance into the exhaust gas flow. Also in this solution the exhaust gas flow is set in its entirety into a rotating motion, whereby the reactive substance mixing with the exhaust gas can hit the walls of the exhaust gas passage.

Documents WO 2009/024815, WO 2004/038192 and US 2006/0275192 disclose an exhaust gas treatment system, wherein the exhaust gas flow is divided into a centre flow and an edge flow surrounding the centre flow. Document WO 2009/024815 discloses a method for cleaning exhaust gas in accordance with the preamble of claim 1.

It is an object of the invention to provide an method for cleaning exhaust gas, by which the drawbacks and disadvantages relating to the prior art can be decreased.

The objects of the invention are obtained with a method, which is characterised in what is presented in the independent claim. An advantageous embodiment of the invention is presented in the dependent claim.

The invention relates to a method for cleaning exhaust gas. In the method a substance is fed into the exhaust gas flow flowing in the exhaust gas passage, which substance reacts with harmful compounds in the exhaust gas in a catalyser, whereby compounds are generated, which are less harmful for the environment. In the method the exhaust gas flow is divided into two parts: a centre flow flowing in the centre of the cross-section of the exhaust gas passage and an edge flow rotating and advancing around the centre flow. The reactive substance used in the cleaning process is fed into the centre flow. Feeding the reactive substance into the centre flow ensures the even mixing of the reactive substance with the exhaust gas and prevents the passing of the reactive substance to the walls of the exhaust gas passage.

The edge flow is advantageously set into a motion, which rotates in a spiral manner and surrounds the centre flow. The edge flow rotating in a spiral manner achieves an increase in the flow pressure in the edge areas of the exhaust gas passage, which efficiently prevents the reactive substance from moving from the centre flow through the edge flow to the walls of the exhaust gas passage.

In the method according to the invention a urea solution, a urea/water solution or ammonia is fed into the exhaust gas flow. The urea is under the influence of heat in the exhaust gas passage converted into ammonia, which reacts with nitrogen oxides in the exhaust gas, whereby nitrogen is generated. After the reactive substance has been fed, the exhaust gas is advantageously led into a catalyser, where the reaction between ammonia and nitrogen oxides takes place.

The flow guide for exhaust gas to be arranged into an exhaust gas passage has a first passage part and a second passage part. The flow guide can be placed in the exhaust gas passage so that substantially all of the exhaust gasses led into the exhaust gas passage pass through the flow guide either along the first or the second passage part. The first passage part is fitted to form a centre flow from the exhaust gas passing through it in the centre of the exhaust gas passage and the second passage part is fitted to form an edge flow rotating and advancing around the centre flow from the exhaust gas passing through it. The flow guide comprises a casing, which has an inlet duct for the inflow of exhaust gas and an outlet hole for the outflow of exhaust gas. The flow guide, which is fitted to the shape of the casing, can easily be connected as a part of the exhaust gas passage by connecting the ends of the exhaust gas passage to the inlet duct and outlet hole. The casing has a first end wall, which has a nozzle hole for placing a nozzle. Through the nozzle to be placed in the nozzle hole a substance, such as urea, which reacts with harmful compounds in the exhaust gas, can be fed into the centre flow of the exhaust gas.

In an advantageous embodiment of the flow guide said first passage part is an inner duct and said second passage part has at least one blade for steering the exhaust gas flowing in the second passage part into a motion rotating the inner duct. The flow guide advantageously comprises a number of blades arranged symmetrically around the inner duct, which blades are fitted to steer the exhaust gas flow into a motion rotating the inner duct.

In a second advantageous embodiment of the flow guide the second passage part can be fitted to steer the exhaust gas into the casing in an eccentric manner, whereby the motion of the edge flow rotating the centre flow can be formed completely without blades in the flow guide.

In a third advantageous embodiment of the flow guide the inner duct and said blades are placed inside said casing. The blades advantageously have a second end edge and the casing has a second end wall, wherein the outlet hole is formed. The blades are attached by their second end edge to the second end wall around the outlet hole. In this embodiment the blades are attached to the end wall of the casing, so they can be separate from the inner duct. The blades can be arranged inside the casing at different distances from the inner duct. Outside the ring-like blade formation symmetrically surrounding the inner duct there can for example be one or more separate blades, which are used to steer the exhaust gas into the ring-like blade formation. Separate blades can be used inside the casing especially by the opening of the inlet duct.

A fourth advantageous embodiment of the flow guide has an end plate, in the centre of which there is a hole. The blades further have a first end edge and the blades are attached by their first end edge to the end plate. Due to the end plate, the second ends of the blades can be supported to be immobile in relation to each other, whereby the gaps between the blades stay evenly wide. The inner duct is advantageously attached to the end plate with a collar.

In still another advantageous embodiment of the flow guide there is at least one equaliser inside the casing for reducing the turbulence of the exhaust gas flowing into the inner duct. The exhaust gas flowing into the inner duct forms a centre flow, wherein the reactive substance is fed. Reducing the turbulence in the inner duct results in that the centre flow and the edge flow remain apart from each other for as long as possible, whereby the reactive substance fed into the centre flow does not come into contact with the wall of the exhaust gas passage before it is disintegrated into ammonia.

In still another advantageous embodiment of the flow guide the equaliser is a perforated sheet, which has a number of holes for the flowing through of exhaust gas. Said perforated sheet is advantageously a cylindrical or conical part between the first end wall and end plate of the casing. The equaliser can also be an intermediate shell surrounding the inner duct and the blades around the inner duct, which intermediate shell has a flow opening for the flowing through of exhaust gas.

It is an advantage of the invention that it significantly reduces the formation of solid precipitates generated in the disintegration of urea in the exhaust gas passage and thus reduces the service need of the equipment. By means of the invention the engine also better retains its operational ability and efficiency.

It is further an advantage of the invention that the urea can be efficiently mixed into the exhaust gas over a short part of the exhaust gas passage. The space requirement of the equipment is thus small. The invention significantly reduces the precipitation risk of the urea also in the bends of the exhaust gas passage, which makes the designing of the exhaust gas passage easier. The flow guide can be integrated with the injection system for the reactive substance as a standard component of the engine, which allows for more freedom in the designing of the exhaust gas passage.

It is further an advantage of the invention that the urea fed into the exhaust gas passage is by means of it efficiently mixed and vaporised, which significantly improves the cleaning efficiency of the equipment.

It is further an advantage of the invention that it can easily be scaled into different sizes according to need.

In the following, the invention will be described in detail. In the description, reference is made to the appended drawings, in which
- Figure 1a: shows as an example as a cross-sectional view an exhaust gas passage, wherein is a flow guide,
- Figure 1b: shows the pressure and flow distribution of the exhaust gas in the exhaust gas passage,
- Figure 2a: shows as an example an advantageous embodiment of the flow guide as a perspective view,
- Figure 2b: shows an embodiment of the flow guide shown in Figure 2a as a longitudinal cross-sectional view,
- Figure 2c: shows an embodiment of the flow guide shown in Figure 2a as a cross-sectional view along sectional line A-A,
- Figure 2d: shows an embodiment of the flow guide shown in Figure 2a as a cross-sectional view along sectional line B-B,
- Figure 3a: shows as an example a second advantageous embodiment of the flow guide as a longitudinal cross-sectional view and
- Figure 3b: shows as an example a third second advantageous embodiment of the flow guide as a longitudinal cross-sectional view.

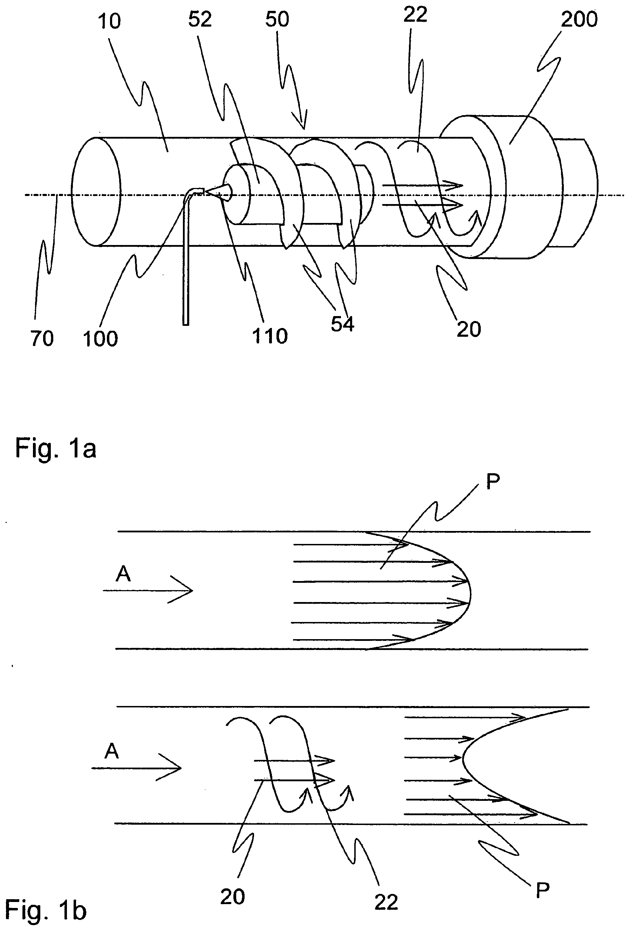

Figure 1a shows as an example a part of an exhaust gas passage 10 as a cross-sectional view. The figure shows the exhaust gas passage as a simplified view, which is used to show the basic principle of the method according to the invention. In the method the exhaust gas flow flowing in the exhaust gas passage is divided into two parts, a centre flow 20 and an edge flow 22 surrounding the centre flow. The centre flow travels in the centre of the cross-section of the exhaust gas passage 10 in the direction of the central axis 70 of the exhaust gas passage. The edge flow travels in the edge areas of the exhaust gas passage and it rotates and advances in a spiral manner around the centre flow.

In the method the exhaust gas flow is divided into a centre flow 20 and an edge flow 22 with the aid of a flow guide 50 placed in the exhaust gas passage. The flow guide is placed in the exhaust gas passage so that all the exhaust gas travelling in the exhaust gas passage has to flow through the flow guide. In the middle of the flow guide there is an inner duct 52 in the direction of the longitudinal axis of the exhaust gas passage, the part of the exhaust gas flow passing through which inner duct forms the centre flow. The effect of the inner duct on the flow of the exhaust gas is in practice nonexistent, so the speed and direction of the centre flow coming from the second end of the inner duct is in practice the same as that of the exhaust gas flow arriving at the first end of the inner duct.

The exhaust gas, which passes through the part of the exhaust gas passage, which is between the outer surface of the inner duct 52 and the inner surface of the exhaust gas passage 10 and has a ring-like cross-sectional shape, forms the edge flow 22. On the outer surface of the inner duct there are blades 54 rotating the inner duct in a spiral manner, which are attached by their first edge to the outer surface of the wall of the inner duct. The second edge of the blades extends to the inner wall of the exhaust gas passage or very close to it. The blades force the exhaust gas flow outside the inner duct into a flow rotating the inner duct. The flow travelling close to the edges of the exhaust gas passage is thus over the distance of the length of the inner duct altered from a substantially even flow into a turbulent flow travelling on the edges of the exhaust gas passage.

After the second end of the flow guide the centre flow and the edge flow are united, i.e. there are no separating passage parts between them. The effect provided with the flow guide however remains in effect in the exhaust gas flow, i.e. a substantially even centre flow and an edge flow surrounding the centre flow in a spiral manner can still clearly be discerned in the flow. It is clear that mixing of the flows occurs in the boundary between the centre flow and the edge flow. This mixing does however not extend to the entire area of the centre flow or edge flow, but only close to the boundary. In the centre of the centre flow and in the outer edges of the edge flow the flows remain nearly unchanged. Mixing of the centre and edge flows occurs gradually as the flows advance in the exhaust gas passage, whereby the flow finally turns into a normal duct flow.

Urea/water solution 110 is with the aid of a nozzle 100 fed into the exhaust gas flow in small drops. The urea included in the solution is under the influence of the heat of the exhaust gas turned into ammonia, which reacts with the nitrogen oxides (NOx) in the exhaust gas, whereby nitrogen gas and water are generated. This reaction occurs in an SCR catalyser 200 in the exhaust gas passage, which catalyser is placed downstream of the flow guide in the flow direction of the exhaust gas. Vaporisation of urea, its turning into ammonia and mixing of the ammonia with the exhaust gas take place in the part of the exhaust gas passage between the urea feeding site, i.e. the nozzle 100, and the SCR catalyser. In the method according to the invention the urea is fed through the nozzle into the centre flow 20 of the exhaust gas flow. The nozzle can be placed in the exhaust gas passage when seen in the flow direction of the exhaust gas immediately in front of the flow guide (as in Figure 1a), immediately after the flow guide or by the flow guide. This placement of the nozzle and the flow guide close to each other ensures that there is a clearly discernable centre flow in the exhaust gas flow at the urea feeding site, i.e. in the spot where the risk of formation of precipitation is the highest. The urea solution fed from the nozzle is directed substantially entirely specifically into the centre flow, which flows apart from the walls of the exhaust gas passage.

Figure 1b shows the pressure and flow distribution P of the exhaust gas flow in the exhaust gas passage calculated with a computer simulation. Arrow A shows the flow direction of the exhaust gas. The upper figure shows the distribution in a passage, which does not have a flow guide, and the lower figure shows the distribution in an exhaust gas passage, which has the centre flow 20 and edge flow 22 formed with the flow guide. From the figures can be seen that in a conventional exhaust gas passage the pressure and flow of the exhaust gas is greatest in the centre of the exhaust gas passage and smallest at the edges of the exhaust gas passage. After having passed through the flow guide the pressure and flow of the exhaust gas flow is greatest at the edges of the exhaust gas passage, i.e. in the edge flow, and smallest in the centre flow. The urea sprayed into the centre flow remains almost entirely in the centre flow area, i.e. it does not collide with the walls of the exhaust gas passage, which would cause a cooling of the walls and formation of precipitates. It has surprisingly been found that the urea remains in the centre flow, i.e. apart from the walls of the exhaust gas passage also in curving parts of the exhaust gas passage. The small amount of urea moving from the centre flow into the edge flow is in the high speed of the edge flow turned into small drops, which are quickly vaporised. Solid precipitates can thus not be formed in the exhaust gas passage.

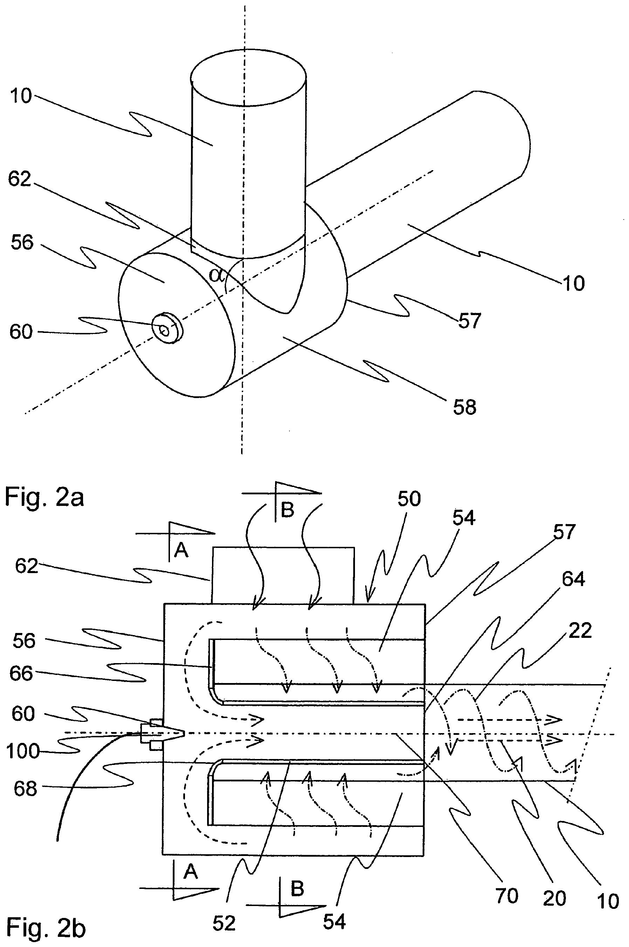

Figure 2a shows as an example an advantageous embodiment of the flow guide used in the invention as a perspective view. This embodiment has a cylindrical casing, which has a first end wall 56, a second end wall 57 and a cylindrical shell 58. In the first end wall there is a nozzle hole 60, where a nozzle 100 (Figure 2b) can be attached for spraying a urea/water solution. The nozzle can be any nozzle used for injecting a liquid substance suitable for the purpose. Especially the nozzle and the entire feeding system for the urea/water solution can be part of a more extensive system affecting the operation and control of the engine. In the second end wall there is an outlet hole 64 (Figure 2b). The outlet hole is formed in the second end wall in an eccentric manner, i.e. its centre point is in a different spot than the centre point of the second end wall. The shell has a penetrating hole, as a continuation of which there is an inlet duct 62. The angle α between the longitudinal axis of the inlet duct and the longitudinal axis of the casing is about 90 degrees. The inlet duct is attached to the shell in a tangential manner, i.e. so that an imaginary central axis of the inlet duct does not intersect an imaginary central axis of the casing. The flow guide is installed as a part of the exhaust gas passage 10, so that the exhaust gas flows from the exhaust gas passage into the casing through the inlet duct and exits from the casing back into the exhaust gas passage through the outlet hole.

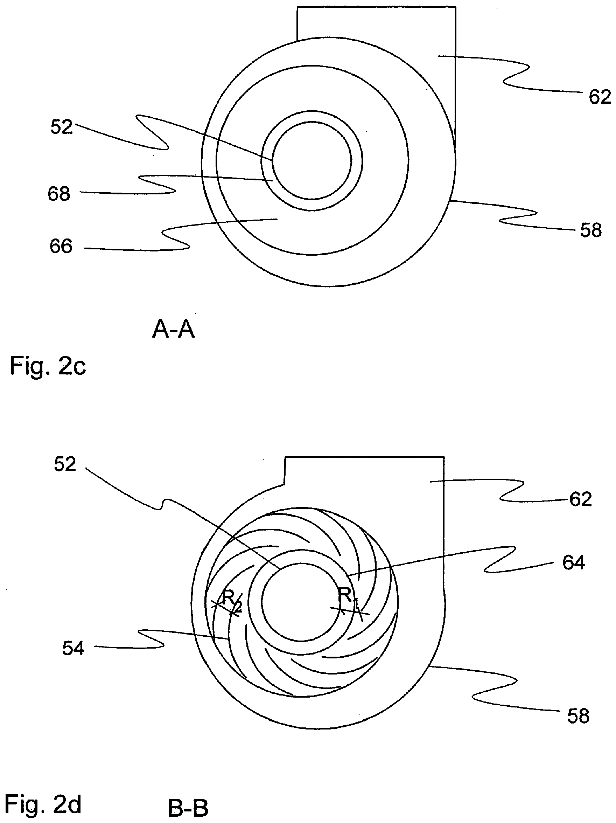

Figures 2b, 2c and 2d show an advantageous embodiment of the flow guide in Figure 2a as cross-sectional views. Figure 2b shows the flow guide split open in the longitudinal direction of the casing and Figures 2c and 2d show the flow guide as cross-sectional views cut along sectional lines A-A and B-B. Inside the casing there is an inner duct 52, which is substantially parallel with the longitudinal axis of the casing. The first end of the inner duct extends to a distance from the first end wall 56 and the second end of the inner duct extends to the level of the second end wall 57. The inner duct is surrounded by a group of blades 54 arranged in a ring-like formation. The blades are substantially rectangular plate-like parts, which are attached by their first end edge to a ring-like end plate 66 and by their second end edge to the second end wall 57 of the casing. The blades are shaped to have a slightly curved, groove-like shape. The blades are placed symmetrically around the inner duct, so that their first side edge is closer to the inner duct than their second side edge and an imaginary straight line drawn through the first and second side edge of the blades is substantially in the direction of a tangent passing through the surface of the inner duct. The first edges of the blades are clearly apart from the inner duct, i.e. there is a clear gap R₁ between the first edge of the blades and the outer surface of the inner duct. Adjacent blades are clearly apart from each other, i.e. there is a clear gap R₂ between each adjacent blade (Figure 2d).

In the centre of the end plate there is a hole, as a continuation of which there is a funnel-like collar 68, pointing toward the second end wall of the casing. The edge of the collar is attached to the first end of the inner duct 52. The collar thus forms a connecting part, by means of which the inner duct is attached to the end plate in a gas-tight manner. The centre point of the outlet hole 64 in the second end wall 57 settles on the same line as an imaginary central axis 70 of the inner duct. The inner duct makes up the first passage part, the exhaust gas flow passing through which is steered directly to the middle of the exhaust gas passage 10 connected as a continuation of the outlet hole. The diameter of the outlet hole is substantially as large as the diameter of a circle drawn through the first side edges of the blades, i.e. substantially larger than the diameter of the inner duct. The exhaust gas outside the inner duct can thus flow through the outlet hole 64 to the edges of the exhaust gas passage. The space between the second edges of the blades and the outer surface of the inner duct makes up the second passage part, through which the exhaust gas flow is steered to the edges of the exhaust gas passage 10 connected as a continuation of the outlet hole. The size of the outlet hole is determined based on the cross-sectional dimensions of the exhaust gas passage. It has through experiments been found that in exhaust gas passages with a diameter of about 100 mm, an optimal edge flow and centre flow are obtained with an inner duct, the diameter of which is about 12-25 mm smaller than the diameter of the exhaust gas passage.

The nozzle hole 60 in the first end wall 56 and the nozzle 100 fitted into the nozzle hole settle on an imaginary central axis 70 of the inner duct. The urea/water solution to be sprayed through the nozzle is thus directed straight into the inner duct, where it is mixed with the exhaust gas flowing in the inner duct.

The advantageous embodiment of the flow guide described in Figures 2a-2d works in the following way: The flow guide is connected as a part of the exhaust gas passage so that the exhaust gas flows from the exhaust gas passage into the casing along the inlet duct. In Figures 2b-2d the exhaust gas flowing into the casing is illustrated with arrows drawn with continuous lines. Inside the casing the exhaust gas flow is divided into two parts. The first part of the exhaust gas flows through the gap between the first end wall 56 and the end plate 66 of the casing into the inner duct and along the inner duct further through the outlet hole 64 out of the casing to the centre of the exhaust gas passage. This part of the exhaust gas flow forms the substantially even centre flow 20 described in this presentation, wherein the water/urea solution is injected. In Figures 2b-2d this part of the exhaust gas flow is illustrated with arrows drawn with dashed lines. The second part of the exhaust gas flows through gaps R₂ between the blades 54 to the free space surrounding the inner duct and from this space further through the outlet hole 64 to the edges of the exhaust gas passage. This part of the exhaust gas flow forms the edge flow 22 surrounding the centre flow described in this presentation. In Figures 2b-2d this part of the exhaust gas flow is illustrated with arrows drawn with dash dotted lines. The blades 54 steer the exhaust gas flowing between them to rotate the central duct in one rotational direction. The edge flow discharged into the exhaust gas passage through the outlet hole is thus a flow, which rotates the centre flow in a spiral manner. After having passed through the outlet hole the centre flow and the edge flow are clearly separate flows, which gradually start to mix together, when the exhaust gas flow advances in the exhaust gas passage 10. The edge flow still remains for so long that it prevents the centre flow and the urea drops therein from hitting the walls of the exhaust gas passage until they have vaporised and turned into ammonia.

In the embodiment shown in Figures 2a-2d the angle between the inlet duct 62 and the longitudinal axis of the casing is 90 degrees. Embodiments of the flow guide can also be manufactured, wherein this angle is some other than 90 degrees. The flow guide can be installed in a bend part of the exhaust gas passage, whereby it simultaneously makes up the bend piece of the passage. The size of the angle between the inlet duct and the longitudinal axis of the casing can thus be selected based on the structure of the exhaust gas passage. The angle α between the inlet duct of the flow guide and the longitudinal axis of the casing can thus be for example 30, 50, 70, 110, 130 or 150 degrees.

In the embodiment shown in Figures 2a-2d the edge flow surrounding the centre flow in a spiral manner is formed with the aid of blades arranged around the inner duct. Blades arranged in the flow guide are not necessarily needed for achieving the spiral form of the edge flow, but it can be formed also in some other way. In one advantageous embodiment of the invention the edge flow is set in a motion rotating the centre flow in a spiral manner by leading the part of the exhaust gas flow which makes up the edge flow into the casing of the flow guide in an eccentric manner. The second passage part of the flow guide is thus formed so that it steers the part of the exhaust gas flow which makes up the edge flow to the edge area of the casing around the centre flow.

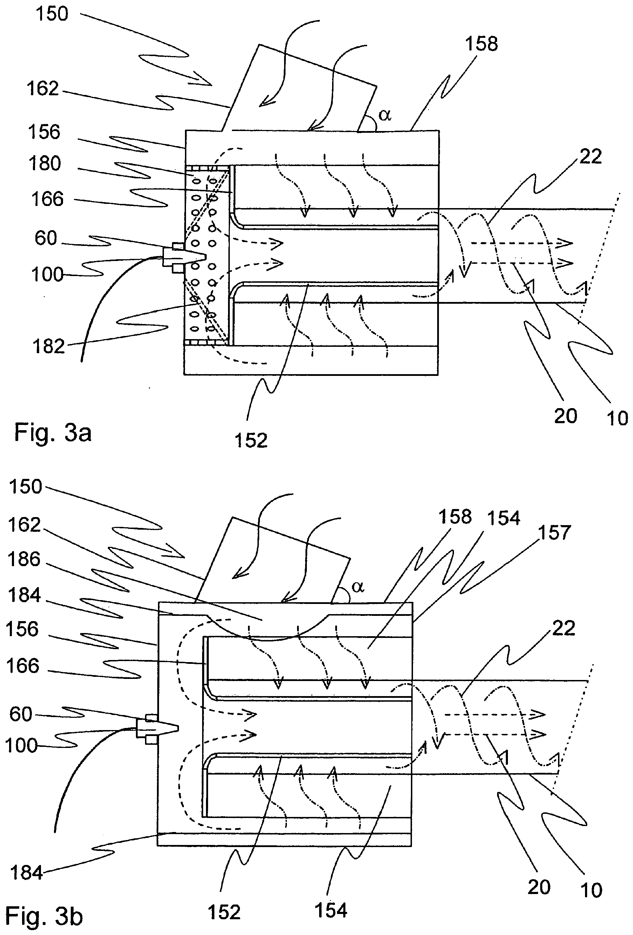

Figure 3a shows as an example a second advantageous embodiment of a flow guide 150 for exhaust gas split open in the longitudinal direction of the casing of the flow guide. In this embodiment the angle α between inlet duct 162 and the shell 158 of the casing and the inner duct 152 inside the shell is clearly smaller than 90 degrees. A part of the exhaust gas flow entering the casing through the inlet duct is thus steered toward a gap between the first end wall 156 and end plate 166 of the casing. Between the first end wall and the end plate there is a cylindrical perforated plate 180, which is attached by its first edge to the first end wall 156 and by its second edge to the end plate 166. The perforated plate has penetrating holes, the size of the diameter of which is three millimetres, substantially evenly over the entire area of the perforated plate, so that the combined surface area of the holes of the entire surface area of the perforated plate, i.e. the so-called perforation cover is about 36 %. The exhaust gas flowing into the inner duct 152 thus has to flow inside the casing to the gap between the first end wall 156 and the end plate 166 through the holes in the perforated plate. The perforated plate functions as an equaliser reducing the turbulence of the exhaust gas flow, which reduces the turbulence of the exhaust gas flowing into the inner duct.

Figure 3a shows an advantageous embodiment of the perforated plate 182 with a dashed line. In this embodiment shown with a dashed line the perforated plate has a conical shape, i.e. it has a first end with a smaller opening and a second end with a larger opening. The perforated plate 182 is attached by its first end to the first end wall 156, so that the nozzle fitted into the nozzle hole 160 settles inside the area delimited by the perforated plate. By its second end the perforated plate is attached to the end plate 166. The conical perforated plate has penetrating holes, the size of the diameter of which is three millimetres, substantially evenly over the entire area of the perforated plate, so that the perforation cover is about 36 %. An advantage of the conical perforated plate is that its surface area is larger than the surface area of a cylindrical perforated plate, so more holes can be made in it, through which the exhaust gas flows through the perforated plate. The conical flow guide aims for the same final result as a cylindrical perforated plate, i.e. to reduce the turbulence of the exhaust gas flowing into the inner duct 152.

One or more perforated plates 180, 182 placed between the first end wall 156 and the end plate 166 can be used in the flow guide for exhaust gas. When using two perforated plates the second perforated plate is situated within the area delimited by the first perforated plate. The perforated plates can to their geometric shape be identical or different. The flow guide can for example have an outer cylindrical first perforated plate 180 and a conical second perforated plate 182 situated within the area delimited thereby. The cross-sectional shape of a conical perforated plate does not need to be evenly changing, and its cross-sectional shape can vary. The combined surface area of the holes in the perforated plates, i.e. the so-called perforation cover, can be 15-50 %. If there are more than one perforated plates in the flow guide, their perforation covers can be different.

Instead of or in addition to perforated plates the flow guide can also use other equalisers for the exhaust gas flow placed inside the casing, which are used to reduce the turbulence of the exhaust gas flowing into the inner duct 152. The equalisers can for example be control blades or ducts, which are arranged around the first end of the inner duct.

It has through experiments been found that the use of equalisers can reduce the turbulence of the exhaust gas flow especially when the amount of exhaust gas flowing into the flow guide is large. If thus at the same time the temperature of the exhaust gas is low, the risk for precipitation of the reactive substance to be fed into the exhaust gas, such as the urea/water solution, is very high. With the aid of the equalisers the turbulence of the exhaust gas flowing into the inner duct can be reduced so significantly that the centre flow and the urea/water solution to be fed therein remains apart from the edge flow travelling close to the walls of the exhaust gas passage for long enough. The equalisers thus improve the operation of the flow guide especially in the afore-mentioned problematic exhaust gas flow circumstances.

Figure 3b shows as an example a third advantageous embodiment of the flow guide for exhaust gas. Figure 3b shows as an example a flow guide for exhaust gas split open in the longitudinal direction. In this embodiment the angle α between inlet duct 162 and the shell 158 of the casing and the inner duct 152 inside the shell is clearly smaller than 90 degrees. It has through experiments been found that the exhaust gas being led into the inner duct strives to swirl especially when the inlet duct is in the manner shown in Figures 3a and 3b connected at a slanting angle to the shell of the casing, whereby a part of the exhaust gas flow entering the casing is steered directly toward the gap between the first end wall 156 and end plate 166 of the casing. If the angle between the wall of the shell and the inlet duct is about 90 degrees (as in Figure 2a) the turbulence of the exhaust gas flow led into the inner duct is significantly smaller. In the embodiment shown in Figure 3b there are blades 154 and a cylindrical intermediate shell 184, which loosely surrounds the inner duct 152, inside the casing, which intermediate shell is supported by its first end to the first end wall 156 of the casing and by its second end to the second end wall 157 of the casing. The intermediate shell has a circular flow opening 186, through which the exhaust gas can flow inside the intermediate shell, where it is further divided into an edge flow 10 and a centre flow 20. The intermediate shell alters the inflow of the exhaust gas to such that it is reminiscent of an inflow coming at a right angle through an inlet duct connected to the shell of the casing and thus reduces the turbulence of the exhaust gas flow led into the inner duct. The intermediate shell thus functions as an equaliser for the exhaust gas flow being led into the inner duct.

The flow guide is especially well suited for use in cleaning processes according to the so-called SCR technique, where a urea/water solution, which easily precipitates on the walls of the exhaust gas passage, is sprayed into the exhaust gas. The invention is however not limited only to the SCR technique or to using a urea/water solution, but the reactive substance to be injected into the exhaust gas can also be some other substance, which is desired to mix evenly with the exhaust gas flow and/or remain apart from the walls of the exhaust gas passage. The reactive substance may thus be for example a urea solution or ammonia.

Some advantageous embodiments of the method according to the invention have been described above. The invention is not limited to the solutions described above, but it can be applied in different ways within the scope of the claims.

## Claims

1. A method for cleaning exhaust gas, in which method urea solution, urea/water solution or ammonia (110) is fed into an exhaust gas flow flowing in an exhaust gas passage (10), wherein
- the exhaust gas flow is divided into a centre flow (20) flowing in the centre of the cross-section of the exhaust gas passage and an edge flow (22) and
- the urea solution, urea/water solution or ammonia is fed into said centre flow,
**characterised in that**
said edge flow rotates and advances around the centre flow.

2. The method according to claim 1, **characterised in that** after the urea solution, urea/water solution or ammonia has been fed, the exhaust gas is led into a catalyser (200).

## Patentansprüche

1. Verfahren zum Reinigen von Abgas, wobei in dem Verfahren eine Harnstofflösung, eine Harnstoff-Wasser-Lösung oder Ammoniak (110) in eine in einer Abgasleitung (10) strömende Abgasströmung eingeleitet wird, wobei
- die Abgasströmung in eine in der Mitte des Querschnitts der Abgasleitung strömende Mittenströmung (20) und eine Randströmung (22) geteilt wird; und
- die Harnstofflösung, die Harnstoff-Wasser-Lösung oder Ammoniak in die Mittenströmung eingeleitet wird,
**dadurch gekennzeichnet, dass**
die Randströmung um die Mittenströmung herum rotiert und sich vorwärts bewegt.

2. Verfahren nach Anspruch 1, **dadurch gekennzeichnet, dass**, nachdem die Harnstofflösung, die Harnstoff-Wasser-Lösung oder Ammoniak eingeleitet worden ist, das Abgas einem Katalysator (200) zugeführt wird.

## Revendications

1. Procédé pour nettoyer un gaz d'échappement, procédé dans lequel une solution d'urée, une solution d'urée/eau ou de l'ammoniaque (110) est introduite dans un écoulement de gaz d'échappement s'écoulant dans un passage de gaz d'échappement (10),
où :
- l'écoulement de gaz d'échappement est divisé en un écoulement central (20) s'écoulant dans le centre de la section transversale du passage de gaz d'échappement et un écoulement de bord (22), et
- la solution d'urée, la solution d'urée/eau ou de l'ammoniaque est introduite dans ledit écoulement central, **caractérisé en ce que** ledit écoulement de bord tourne et avance autour de l'écoulement central.

2. Procédé selon la revendication 1, **caractérisé en ce qu'**après que la solution d'urée, la solution d'urée/eau ou de l'ammoniaque (110) a été introduite, le gaz d'échappement est conduit dans un catalyseur (200).
